# FASCICULE DE BREVET EUROPEEN

(11) **EP 2 159 018 B1**
(45) Date de publication et mention de la délivrance du brevet: **24.07.2013**
(21) Numéro de dépôt: 09358007.4
(22) Date de dépôt: 25.08.2009
(51) Int. Cl.: B27B 17/08

(54) **Dispositif de sécurité pour outil portatifs à moteur thermique, permettant l'arret de leur fonctionnement, par suite de mouvements brusques et violents imprévus**
Sicherheitsvorrichtung für ortsveränderliche Werkzeuge mit Wärmekraftmaschinen, die eine Abschalten ihrer Funktion bei Auftreten von unvorhergesehenen heftigen und gewaltsamen Bewegungen ermöglicht
Safety device for portable tools with heat engine capable of stopping their operation following unexpected sudden and violent movements

(30) Priorité: 29.08.2008 FR 0804753
(43) Date de publication de la demande: 03.03.2010
(73) Titulaire: PELLENC (Société Anonyme), 84120 Pertuis (FR)
(72) Inventeur: Pellenc, Roger, 84120 Pertuis (FR)
(74) Mandataire: Marek, Pierre

(56) Documents cités:
- US-A- 3 923 126
- US-A- 4 573 556
- US-A- 5 914 882
- US-A1- 2004 125 596
- US-A1- 2004 181 951
- US-A1- 2005 055 832
- US-A1- 2007 008 162
- US-A1- 2009 193 669

## Description

La présente invention concerne un dispositif pour les outils portatifs à moteur thermiques permettant l'arrêt automatique instantané du fonctionnement de ces derniers, par suite de mouvements brusques et violents imprévus auxquels ils sont exposés lors de leur utilisation pour assurer la sécurité de l'utilisateur. Elle s'applique, en particulier, aux scies à chaîne à moteur thermique, encore appelées tronçonneuses.

Un tel dispositif est connu du document US 2004/018151 qui décrit un système de sécurité pour scie à chaîne portable à moteur thermique, ce système comprenant un accéléromètre à trois axes relié à un moyen de contrôle constitué par une carte de gestion électronique, celle-ci et l'accéléromètre étant alimentés par un générateur de courant électrique actionné par le moteur thermique, ladite carte de gestion électrique ou électronique étant configurée pour traiter les informations issues de l'accéléromètre et pour activer un moyen mécanique constitué par un levier de frein assurant l'arrêt dudit moteur thermique en cas de mouvements brusques et imprévus de l'outil.

La réglementation officielle requiert que les scies à chaîne soient munies d'un dispositif de sécurité assurant l'arrêt de l'outil en cas de recul important appelé « rebond » dans le langage professionnel et qui correspond à une accélération exprimée en m/s² (entre 700 et *2000 m*/*s²,* selon le type d'outils).

Actuellement, dans l'application aux scies à chaîne, ce dispositif est, le plus souvent, constitué par un moyen mécanique recouvrant la poignée avant de préhension de l'outil et qui, soit par inertie liée au rebond, soit en heurtant la main qui tient cette poignée lors d'une violente accélération, actionne un système qui freine l'entrainement de la chaine de coupe jusqu'à l'arrêt du moteur de l'outil.

Un dispositif comparable est par exemple décrit dans le document EP-1350607.

Dans le document US 4 573 556, est décrit un actionneur pour un dispositif de freinage d'urgence pour un outil motorisé portable tel qu'une scie à chaîne. Lors d'un phénomène de rebond de la scie à chaîne, cet actionneur pivote et son mouvement d'accélération est détecté par un générateur à effet Hall lequel génère un signal vers une unité électronique qui actionne un frein mécanique et, en même temps, peut commander l'arrêt du circuit d'allumage.

Les dispositifs de sécurité de l'art antérieur, constitués par des moyens mécaniques présentent, toutefois, plusieurs inconvénients :
- ils ne fonctionnent que par inertie lorsque l'outil est tenu d'une seule main ;
- ils sont actifs dans un seul plan (avant/arrière) et ne fonctionnent pas dans les autres plans ;
- ils peuvent, en cas de rebond violent, occasionner des blessures dues aux chocs sur la main en contact avec le dispositif ;
- leur seuil de déclenchement par inertie est très élevé du fait que les masses en mouvement sont petites (entre 700 et 2000 m/s², suivant les modèles d'outils) ;
- leur temps de réponse est relativement lent (de l'ordre de 10 à 15 millisecondes) ;
- ils n'offrent aucune sensibilité de réglage ;
- ils fonctionnent par action sur l'outil proprement dit (par exemple sur la chaîne dans l'application aux scies à chaîne) ;
- ils sont sujets à une usure due au frottement ;
- ils peuvent se bloquer en position hors service ;
- ils sont relativement encombrants et coûteux.

La présente invention a plus précisément pour objet un dispositif de sécurité pour des outils portatifs à moteur thermique permettant l'arrêt automatique instantané desdits outils en cas de rebond violent, tout en remédiant aux inconvénients susmentionnés des systèmes anti-rebonds basés sur la mise en oeuvre de moyens mécaniques ou de moyens électroniques appliqués aux outils électroportatifs.

Le dispositif de sécurité pour outil portatif à moteur thermique selon l'invention est defini par les caractéristiques de la revendication 1.

Selon un mode de mise en oeuvre préféré du dispositif de l'invention, avantageusement applicable aux outils portatifs à moteur thermique, ledit moyen de contrôle est constitué par un moyen de commande électrique et/ou électronique indépendant du moyen de gestion du moteur et configuré pour traiter les informations électriques analogiques ou numériques issues de l'accéléromètre et pour commander un organe de freinage agissant directement sur l'arbre de sortie du moteur et/ou sur l'avance à l'allumage.

Le dispositif pour outils portatifs à moteur thermique selon l'invention, offre des avantages intéressants ; notamment :
- l'accéléromètre agit directement sur le moteur thermique de l'outil, par l'intermédiaire des moyens de gestion électriques ou électroniques ;
- le temps de réponse du dispositif est très rapide (de l'ordre de quelques millisecondes) ;
- ils ne comportent pas l'utilisation d'organes mobiles, de sorte qu'ils ne sont pas soumis à usure ;
- possibilité de descendre le seuil de déclenchement de la sécurité, en raison du fait que l'inertie et la masse en mouvement n'interviennent pas dans le fonctionnement du dispositif, seule l'accélération est prise en compte ;
- possibilité de régler la sensibilité en programmant le seuil de déclenchement ;
- possibilité de fonctionner dans plusieurs plans ;
- possibilité de vérifier le bon fonctionnement du dispositif lors de la mise en route du moteur thermique en utilisant un moyen de contrôle électrique et/ou électronique permettant un autocontrôle du fonctionnement de l'accéléromètre ;
- le dispositif est plus léger et économique que les dispositifs de sécurité mécaniques.

Selon une autre disposition caractéristique, la détection des accélérations est assurée par un accéléromètre électronique deux axes ou par au moins deux accéléromètres électroniques mono axe, équipant l'outil portatif et positionnés de telle sorte qu'un axe puisse être privilégié.

Selon une autre disposition caractéristique, la détection des accélérations est assurée par un accéléromètre à trois axes.

Il est ainsi possible de mesurer l'accélération dans plusieurs plans, ce qui permet d'éviter les conséquences fâcheuses possibles de rebonds dans des positions de travail dangereuses, cette particularité permet, en effet, d'avoir le même degré de sécurité quelles que soient la tenue de l'appareil et la position de travail de l'utilisateur : par exemple, lors de l'élagage des arbres, l'utilisateur monte dans ceux-ci et tient l'outil d'une seule main, l'autre main servant à assurer sa position en se tenant aux branches.

Les buts, caractéristiques et avantages ci-dessus, et d'autres encore, ressortiront mieux de la description qui suit et des dessins annexés dans lesquels :

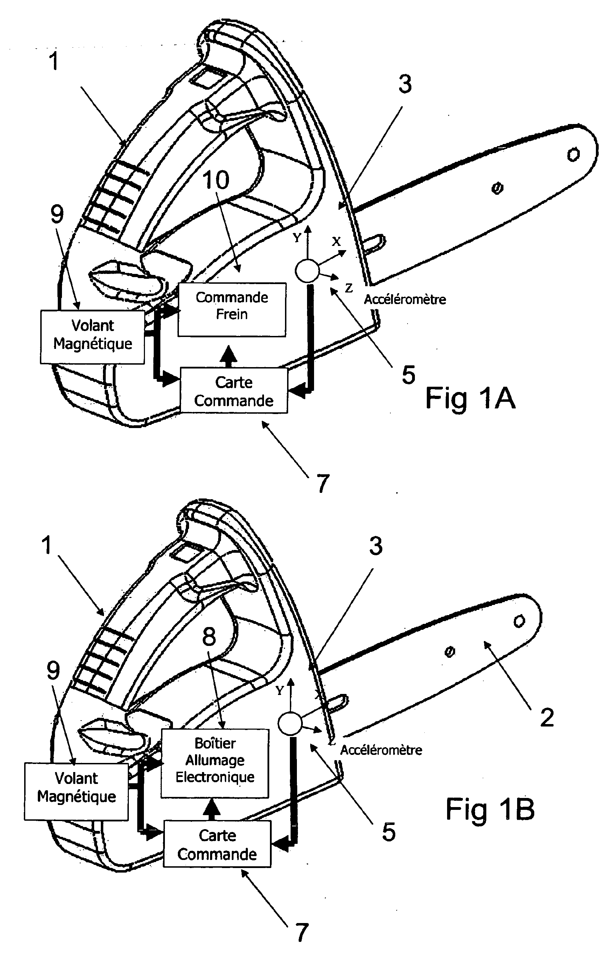

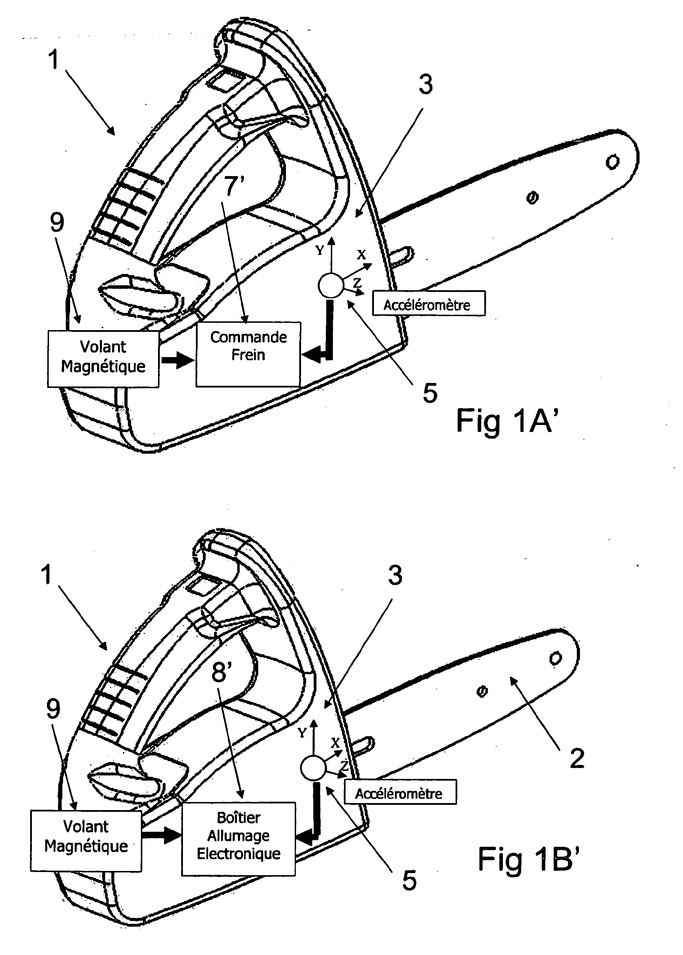

- La figure 1A est une vue en perspective et à caractère schématique d'un exemple de réalisation d'un outil portatif, l'outil représenté, selon cet exemple, étant constitué par une scie à chaîne à moteur thermique, avec un moyen de commande électrique et/ou électronique et une commande de frein séparés.
- La figure 1A' est une vue en perspective et à caractère schématique d'un autre exemple de réalisation d'un outil portatif, l'outil représenté, selon cet exemple, étant constitué par une scie à chaîne à moteur thermique, avec un moyen de commande électrique et/ou électronique et une commande de frein réunis sur une commande unique.

- La figure 1B est une vue en perspective et à caractère schématique d'un premier exemple de réalisation d'un outil portatif selon l'invention, l'outil représenté, selon cet exemple, étant constitué par une scie à chaîne à moteur thermique, avec un moyen de commande électrique et/ou électronique et boîtier d'allumage électronique séparés.
- La figure 1 B' est une vue en perspective et à caractère schématique d'un autre exemple de réalisation d'un outil portatif selon l'invention, l'outil représenté, selon cet exemple, étant constitué par une scie à chaîne à moteur thermique, avec un moyen de commande électrique et/ou électronique et boîtier d'allumage électronique réunis sur une commande unique.
- La figure 2 est un schéma de principe d'un exemple de mise en oeuvre, en mode analogique, du dispositif de l'invention, applicable à un outil portatif à moteur thermique.
- La figure 3 est un schéma de principe d'un autre exemple de mise en oeuvre, en mode numérique, de ce dispositif.

On se réfère auxdits dessins pour décrire des exemples intéressants, bien que nullement limitatifs, de réalisation des outils portatifs à moteur thermique selon l'invention.

On décrit ci-après une application très avantageuse d'un outil portatif à moteur thermique qui, selon l'exemple illustré est constitué par une scie à chaîne 1, mais on rappelle que l'invention est applicable à tout outil portatif à moteur thermique dangereux, en particulier à tout outil portatif à moteur thermique que l'on veut équiper d'un dispositif de sécurité capable d'arrêter instantanément son fonctionnement en cas de mouvement brusque imprévu ou rebond, par exemple : tronçonneuses à scie circulaire à moteur thermique, taille haie à moteur thermique, débroussailleuse à moteur thermique, tarière à moteur thermique, etc.

L'invention est applicable aux outils portatifs à entraînement par moteur thermique, c'est-à-dire aux appareils dont l'outil actif proprement dit 2 (une chaîne dans le cas des scies à chaîne 1 illustrées aux figures 1A à 1B) est animé par un moteur thermique M', renfermé dans un corps ou carter 3 et alimenté en courant électrique par un volant magnétique 9.

Cette source électrique 9 sert aussi à alimenter les diverses cartes électriques ou électroniques des outils. Elle est entrainée par le moteur thermique ; elle pourrait être remplacée par un autre générateur de courant électrique, par exemple par une dynamo ou autre, également actionné par le moteur thermique.

Selon le dispositif de sécurité de l'invention, au moins un accéléromètre 5 capable de mesurer une accélération sur au moins un plan ou axe (par exemple axe X : avant / arrière) est incorporé à l'outil, de préférence en un emplacement situé au centre de gravité ou à proximité du centre de gravité de ce dernier. Cet emplacement a pour avantage de permettre de traiter directement les informations issues de l'accéléromètre, ou des accéléromètres, par une carte électronique de gestion intégrée à l'outil. Toutefois, si pour des dispositions constructives, on est amené à éloigner ce ou ces accéléromètres du centre de gravité, il faut corriger les informations issues du ou des accéléromètres pour qu'elles correspondent à celles qui seraient issues du ou des accéléromètres situé(s) au centre de gravité ou à proximité de ce dernier, à l'aide du microcontrôleur de la carte de gestion intégrée et, par un calcul mathématique simple connu en soi, ces informations corrigées peuvent être traitées de manière identique à celles exposées dans la présente description.

L'accéléromètre 5 ou les accéléromètres peu(ven)t aussi être positionné(s) à proximité des moyens de préhension de l'outil.

Selon un mode d'exécution de l'outil, ce dernier est équipé d'un accéléromètre électronique deux axes ou d'au moins deux accéléromètres électroniques mono axe délivrant chacun un signal représentatif de l'accélération subie par l'un des deux axes concernés, par exemple axe X (avant / arrière) et axe Y (vers le haut / vers le bas), de sorte à permettre une mesure des accélérations dans deux plans.

Suivant un mode préféré d'exécution de l'outil, celui-ci est équipé d'un accéléromètre électronique trois axes X, Y, Z, dont les sorties délivrent des informations électriques analogiques ou numériques représentatives de l'accélération subie par l'axe concerné, de sorte à permettre une mesure des accélérations dans trois plans.

Les deux accéléromètres mono axe, ou l'accèléromètre deux axes, ou l'accéléromètre trois axes sont/est positionné(s) de telle sorte qu'un axe puisse être privilégié.

La sortie de l'accéléromètre 5, ou des accéléromètres, est reliée :
- soit, selon le dispositif illustré à la figure 1A, à un moyen de commande électrique et/ou électronique 7 configuré pour traiter les informations électriques analogiques ou numériques issues de l'accéléromètre, ou des accéléromètres, et pour commander un organe de freinage 10 agissant directement sur l'arbre de sortie du moteur M'.
- soit, selon l'invention, à un moyen de commande électrique et/ou électronique configuré pour traiter les informations électriques analogiques ou numériques issues de l'accéléromètre, ou des accéléromètres, et pour agir sur l'avance à l'allumage 8 pour freiner le moteur M' (figure 1 B).

Plusieurs solutions sont possibles pour la mise en oeuvre de l'invention.

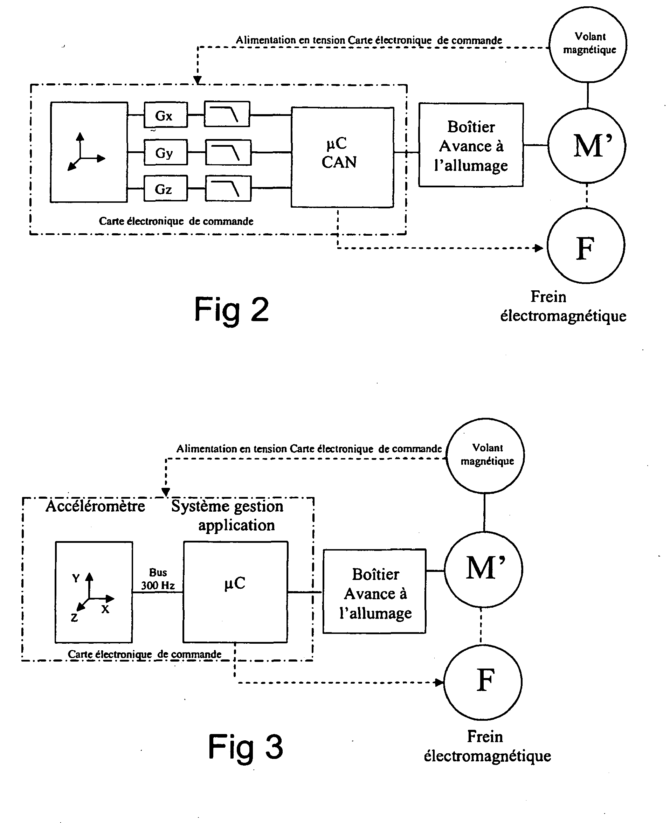

Une première solution est représentée par le schéma de la figure 2. Dans ce cas, le traitement par le moyen de commande électrique et /ou électronique du/des signal(aux) analogique issu(s) du/des accéléromètre(s) par l'unité de traitement numérique permet, lorsque les conditions d'enclenchement du freinage sont atteintes, d'adresser un ordre soit au système de freinage indépendant F, soit au boîtier électronique d'avance à l'allumage pour freiner le moteur M'.

Une deuxième solution est représentée par le schéma de la figure 3. Dans ce cas, le traitement par le moyen de commande électrique et /ou électronique du/des signal(aux) numérique(s) issu(s) du/des accéléromètre(s) par l'unité de traitement numérique permet, lorsque les conditions d'enclenchement du freinage sont atteintes, d'adresser un ordre soit au système de freinage indépendant F, soit au boîtier électronique d'avance à l'allumage pour freiner le moteur M'.

Les informations électriques analogiques ou numériques issues de(s) l'accéléromètre(s) sont traitées au niveau du boîtier d'allumage électronique 8 (figure 1B), en coupant l'alimentation électrique du moteur thermique M' et/ou en agissant sur l'avance à l'allumage programmée dudit moteur thermique M', pour arrêter celui-ci par l'intermédiaire d'une carte électronique agissant sur le boîtier d'allumage électronique 8 ou pouvant être incluse directement dans ledit boîtier d'allumage électronique 8. En effet, si l'on modifie l'avance à l'allumage avant la coupure de celui-ci, on crée un couple inverse à celui normal de fonctionnement, agissant comme un frein très puissant et provoquant le calage quasi immédiat de celui-ci (ce calage est effectif après 1 à 3 tours du moteur, soit en 0,01 à 0,06 seconde).

La carte commande 7 et la commande de frein 10 peuvent être regroupés sur une seule carte de commande 7' suivant la Figure 1A'.

La carte commande 7 et le boîtier d'allumage électronique 8 peuvent être regroupés sur une seule carte de commande 8' suivant la Figure 1 B'.

## Revendications

1. Dispositif de sécurité pour outil portatif à moteur thermique permettant l'arrêt quasi instantané du fonctionnement dudit outil, par suite de mouvements brusques et violents imprévus, ledit dispositif comprenant au moins un accéléromètre électronique (5) permettant une mesure de l'accélération suivant au moins un plan ou axe (X, Y, Z), la sortie, ou chaque sortie, de cet accéléromètre (5) étant reliée à un moyen de contrôle électrique et/ou électronique (7), ledit moyen de contrôle électrique et/ou électronique étant constitué d'une carte de gestion électrique et/ou électronique (7), celle-ci et l'accéléromètre étant alimentés en tension électrique par un générateur de courant électrique (9) connu en soi actionné par le moteur thermique, cette carte de gestion électrique ou électronique étant configurée pour traiter les informations électriques analogiques ou numériques issues de l'accéléromètre et pour activer un moyen assurant l'arrêt dudit moteur thermique, **caractérisé en ce que** le moyen permettant de freiner le moteur est constitué par un système permettant d'agir sur l'avance à l'allumage programmée du moteur thermique (M') pour arrêter celui-ci, ce qui a pour effet de créer un couple inverse à celui normal de fonctionnement agissant comme un frein très puissant et provoquant le calage immédiat dudit moteur (M'), ceci par l'intermédiaire d'une carte électronique agissant sur le boîtier d'allumage électronique (8) ou pouvant être incluse directement dans ledit boîtier d'allumage électronique (8').

2. Dispositif de sécurité pour outil portatif à moteur thermique selon la revendication 1, **caractérisé en ce qu'**il comprend un accéléromètre électronique deux axes, ou au moins deux accéléromètres électroniques mono-axe, permettant une mesure des accélérations dans au moins deux plans ou axes (X, Y, Z), lesdits accéléromètres étant positionnés de telle sorte qu'un axe puisse être privilégié.

3. Dispositif de sécurité pour outil portatif selon la revendication 2, **caractérisé en ce qu'**il comprend un accéléromètre à trois axes (X, Y, Z), permettant de mesurer les accélérations dans trois plans.

4. Dispositif de sécurité pour outil portatif à moteur thermique suivant l'une quelconque des revendications 1 à 3, **caractérisé en ce que** l'accéléromètre (5) ou les accéléromètres est/sont positionné(s) au centre de gravité ou à proximité du centre de gravité de l'outil.

5. Outil portatif à moteur thermique, en particulier pour scies à chaîne, tronçonneuses à scie circulaire, perceuses, meuleuses à disque, raboteuses, **caractérisé en ce qu'**il est muni d'un dispositif de sécurité selon l'une quelconque des revendications 1 à 4.

## Patentansprüche

1. Sicherheitsvorrichtung für ortsveränderliche Werkzeuge mit Wärmekraftmaschinen, welche ein sofortiges Abschalten des Werkzeugs beim Auftreten von plötzlichen unvorhergesehenen und heftigen Bewegungen erlaubt, wobei die Vorrichtung mindestens einen elektronischen Beschleunigungsmesser (5) zum Messen der Beschleunigung entlang zumindest eine Ebene oder einer Achse (X, Y, Z) aufweist, wobei der Ausgang oder jeder Ausgang des Beschleunigungsmessers (5) mit einer elektrischen und /oder elektronischen Steuereinrichtung (7) verbunden ist, wobei die elektrische und/oder elektronische Steuereinrichtung eine elektrische und/oder elektronische Steuerungs-Karte (7) umfasst, und diese und der Beschleunigungsmesser mit elektrischer Energie von einem an sich bekannten elektrischen Strom-Generator (9), betätigt durch die Wärmekraftmaschine, gespeist werden, wobei die elektrische oder elektronische Steuerungs-Karte ausgebildet ist, um analoge oder digitale elektrische Informationen von dem Beschleunigungsmesser zu verarbeiten und Mittel zum Anhalten des Motors zu aktivieren, **dadurch gekennzeichnet, dass** die Mittel zum Bremsen des Motors ein System umfassen, um auf die Zündung der Wärmekraftmaschine (M ') einzuwirken und diesen abzuschalten, mittels einer elektronische Karte, die auf die elektronische Zündung (8) direkt einwirkt oder die im Gehäuse (8') der elektronischen Zündung eingebettet ist, um ein Rückwärtsdrehmoment zu erzeugen bezüglich den normalen Betriebsbedingungen mit der Wirkung einer leistungsfähigen Bremse, was das unmittelbare Anhalten des genannten Motors (M') bewirkt.

2. Sicherheitsvorrichtung für ortsveränderliche Werkzeuge mit Wärmekraftmaschinen gemäß Anspruch 1, **dadurch gekennzeichnet, dass** diese einen elektronischen Zweiachsen-Beschleunigungsmesser oder mindestens zwei elektronische Einachsen-Beschleunigungsmesser aufweisen, so dass die Messung von Beschleunigungen in mindestens zwei Ebenen oder Achsen (X, Y, Z) möglich ist, wobei der Beschleunigungsmesser so positioniert ist, dass eine Achse Vorrang haben kann.

3. Sicherheitsvorrichtung für ortsveränderliche Werkzeuge mit Wärmekraftmaschinen gemäß Anspruch 2, **dadurch gekennzeichnet, dass** diese einen elektronischen Dreiachsen-Beschleunigungsmesser (X, Y, Z) aufweist, so dass die Messung von Beschleunigungen in drei Ebenen möglich ist.

4. Sicherheitsvorrichtung für ortsveränderliche Werkzeuge mit Wärmekraftmaschinen gemäß einem der Ansprüche 1 bis 3, **dadurch gekennzeichnet, dass** der Beschleunigungsmesser oder die Beschleunigungsmesser im Schwerpunkt oder in der Nähe des Schwerpunktes des Werkzeuges angeordnet ist/sind.

5. Ortsveränderliches Werkzeug mit einer Wärmekraftmaschine, insbesondere für Kettensägen, Kreiskettensägen, Bohrmaschinen, Schleifscheibenmaschinen, Hobelmaschinen, **dadurch gekennzeichnet, dass** es mit einer Sicherheitseinrichtung nach einem der Ansprüche 1 bis 4 ausgebildet ist.

## Claims

1. A safety device for a portable tool with a thermal motor that enables the operation of said tool to be stopped instantaneously as a result of unforeseen sudden, violent movements, wherein said device comprises at least one electronic accelerometer (5) enabling a measurement of the acceleration in at least one plane or at least one axis (X, Y, Z), wherein the output, or each output of this accelerometer (5) is connected to a means of electrical and/or electronic control (7), wherein said means of electrical and/or electronic control consists of an electrical and/or electronic management board (7), wherein the latter and the accelerometer are supplied with an electric voltage by a conventional electric current generator (9) driven by the thermal motor and wherein this electrical and/or electronic management card is configured to process the analogue or digital electrical information derived from the accelerometer and to activate a means that ensures the stopping of said thermal motor, **characterised in that** the means enabling the motor to be braked comprises a system enabling the programmed timing of the thermal motor (M') to be influenced in order to stop the latter, the effect of which is to create a torque inverse to the normal operating torque acting as a very powerful brake giving rise to the immediate stalling of said motor (M') by means of an electronic card acting on the electronic ignition unit (8) or being able to be included directly in said electronic ignition unit (8').

2. The safety device for a portable tool with a thermal motor according to Claim 1, **characterised in that** it comprises a two-axis electronic accelerometer, or at least two single axis electronic accelerometers enabling accelerations to be measured in at least two planes or axes (X, Y, Z), wherein said accelerometers are positioned so that one axis can be given preference.

3. The safety device for a portable tool according to Claim 2, **characterised in that** it comprises a three-axis (X, Y, Z) accelerometer that enables the accelerations to be measured in three planes.

4. The safety device for a portable tool with a thermal motor according to any one of Claims 1 to 3, **characterised in that** the accelerometer (5) or the accelerometers is/are positioned at the centre of gravity or close to the centre of gravity of the tool.

5. A portable tool with a thermal motor, particularly for chain saws, crosscut circular saws, drills and disc grinders and planers, **characterised in that** it is provided with a safety device according to any one of Claims 1 to 4.
